# EUROPEAN PATENT APPLICATION

(11) **EP 2 666 696 A1**
(43) Date of publication of application: **27.11.2013**
(21) Application number: 12737168.0
(22) Date of filing: 13.01.2012
(51) Int. Cl.: B61F 5/22, B61F 5/10, F16F 9/02, F16F 9/32, G01B 7/02, G01D 5/20

(54) **VEHICLE BODY HEIGHT ADJUSTMENT VALVE HAVING RESOLVER FOR RAILWAY CARRIAGE**

(30) Priority: 20.01.2011 JP 2011010022
(71) Applicant: Nippon Steel & Sumitomo Metal Corporation, Tokyo 100-8071 (JP)
(72) Inventor: SHINAGAWA, Daisuke, Chiyoda-ku Tokyo 1008071 (JP); NEGORO, Shoji, Chiyoda-ku Tokyo 1008071 (JP)
(74) Representative: Zimmermann & Partner
(86) International application number: PCT/JP2012/000166
(87) International publication number: WO 2012/098841

(57) **Abstract**

Provided is a vehicle body height adjustment valve that includes an actuating shaft rotating in response to a variation in the height of an air spring, and performs a pressurized air supplying or discharging operation on the air spring in response to the rotation of the actuating shaft, so as to adjust the height of the vehicle body at a constant height, the vehicle body height adjustment valve including a resolver that detects the height of the air spring so that the vehicle body is tilted when the railway vehicle travels along a curve; wherein the resolver includes a rotor that is fixed to the actuating shaft and a stator that surrounds the rotor, in which an inner circumferential surface of the stator is provided with a plurality of iron cores having excitation coils and detection coils that are wound therearound and arranged in a circumferential direction so as to face an outer circumferential surface of the rotor, and in which an outer peripheral profile of the rotor is configured such that a gap between the outer circumferential surface of the rotor and each iron core of the stator changes periodically in a circumferential direction during a 360-degree rotation of the rotor. The vehicle body height adjustment valve having a resolver for a railway vehicle with such a configuration can realize reductions of cost and size.

## Description

### TECHNICAL FIELD

The present invention relates to a vehicle body height adjustment valve (a leveling valve: hereinafter, also referred to as an "LV") for a railway vehicle that adjusts the height of a vehicle body supported by an air spring on a bogie of a railway vehicle to be constant, and particularly, to a resolver-attached LV that is integrally provided with a resolver as a sensor that detects the height of an air spring so that the vehicle body is tilted when a railway vehicle travels along a curve.

### BACKGROUND ART

A railway vehicle includes a vehicle body and a bogie, and the vehicle body is supported on the bogie through a pair of left and right air springs. In general, the railway vehicle includes a vehicle body height adjustment device which adjusts the height of the vehicle body at a constant height on the left and right sides thereof with respect to the bogie by duly supplying pressurized air from an air tank to each air spring or discharging air from each air spring in order to maintain the posture of the vehicle body in a horizontal state when the railway vehicle travels slowly or stops for passengers who want to get on or off the railway vehicle. As the vehicle body height adjustment device, pneumatic piping which extends from the air tank to each air spring is disposed, and an LV is provided in the path of the piping. The LV serves as a valve which mechanically detects a variation in the height of the air spring and performs a pressurized air supplying and discharging operation on the air spring in response to the height variation.

Specifically, for example, as disclosed in Patent Literature 1, the LV is fixed to the vehicle body, and a lever mounted to an actuating shaft of the LV is connected to the bogie through a link mechanism. There is a case in which the LV is fixed to the bogie. In this case, the lever of the LV is connected to the vehicle body through the same link mechanism. In this way, in the LV connected to the vehicle body and the bogie, when the height of the air spring varies, the height variation is mechanically transmitted to the lever through the link mechanism, and the actuating shaft rotates along with the lever. For example, when the height of the air spring is decreased, the actuating shaft rotates in response thereto, and an inlet port is opened, pressurized air is supplied to the air spring. Meanwhile, when the height of the air spring increases, the actuating shaft rotates in a direction opposite to the above-described case in response thereto, and the outlet port is opened, air is discharged from the air spring.

Incidentally, a railway vehicle traveling at high speed such as a Shinkansen "bullet train" includes a vehicle body tilt device which tilts a vehicle body with respect to a bogie by supplying pressurized air to the air spring on the outer track side or discharging air from the air spring on the inner track side in order to tilt the vehicle body toward the inner track side when the railway vehicle travels along a curve. As the vehicle body tilt device, pneumatic piping which extends from the air tank to each air spring is disposed as a system different from the pneumatic piping of the above-described vehicle body height adjustment device, and a dedicated tilt control valve is provided in the path of the piping. The tilt control valve is a valve which performs a pressurized air supplying and discharging operation on the air spring so that the tilt angle of the vehicle body becomes a predetermined angle.

Here, a sensor for detecting the height of the air spring is essential for the vehicle body tilt device. This is because the tilt control valve is appropriately operated by duly obtaining the height of the air spring based on the output signal from the sensor and obtaining the tilt angle of the vehicle body from the height of the air spring. In general, a rotation angle sensor such as a resolver or an encoder is employed as the sensor. Hitherto, the rotation angle sensor is provided separately from the LV so as to be fixed to the vehicle body or the bogie and a lever mounted to the rotor (the rotation body) of the rotation angle sensor is connected to the bogie or the vehicle body through a link mechanism so as to detect the height of the air spring as the rotation angle of the lever.

In recent years, there has been a strong demand for cost reduction of the railway vehicle, and an active attempt is made to reduce numbers of components. For this reason, since the LV and the rotation angle sensor are operated by the same link mechanism, the numbers of components may further be reduced when the link mechanism is used in common. Accordingly, for example, Patent Literature 2 proposes a rotation angle sensor-attached LV in which a link mechanism is used in common and a rotor of a rotation angle sensor is mounted to an actuating shaft of an LV.

### CITATION LIST

### PATENT LITERATURE

PATENT LITERATURE 1: Japanese Patent Application Publication No. 2004-262438
PATENT LITERATURE 2: Japanese Patent Application Publication No. 2006-327391

### SUMMARY OF INVENTION

### TECHNICAL PROBLEM

In the rotation angle sensor-attached LV proposed in Patent Literature 2, a resolver is used as the rotation angle sensor. The resolver is effective and useful because robustness is excellent compared to the encoder.

However, as illustrated in paragraph [0024] and FIG. 3 of Patent Literature 2, the resolver of the related art disclosed in Patent Literature 2 includes a rotation angle detecting unit provided for each of the rotor and the stator (the stator body) surrounding the rotor, so that the rotor is provided with an excitation coil and the stator is provided with a detection coil. Then, in the resolver of the related art, the winding of the coil is needed for both the rotor and the stator, and a brush or a rotation transformer for supplying power to the excitation coil of the rotating rotor is needed. For this reason, the resolver of the related art has inevitable problems in that the structure becomes complicated, the cost increases, and the size increases. Such problems of the resolver also affect the resolver-attached LV.

The present invention is made in view of the above-described problems, and an object of the present invention is to provide a vehicle body height adjustment valve having a resolver that enables the cost and size to be reduced even when a resolver that detects the height of an air spring of a railway vehicle is integrally provided in the valve.

### SOLUTION TO PROBLEM

The present inventors have obtained the following finding by earnest studies for attaining the above-described object. In a resolver-attached LV, it is effective to employ a resolver having coils only in a stator in order to realize the reduction of cost and size. Since the coil is not provided in a rotating rotor, coil windings are needed only in the stator, and a power supply brush and a rotation transformer are not necessary any more. As a result, the structure may be simplified and the numbers of components may be reduced.

For detecting the rotation angle by such a resolver, there is a need to set the outer peripheral profile of the rotor so that a gap between the outer circumferential surface of the rotor and the iron core of the stator coil periodically changes in a circumferential direction during a 360-degree rotation of the rotor. Accordingly, the gap changes in response to the rotation of the rotor, the density of the magnetic flux permeating the gap changes in response thereto, and the output of the coils changes in response thereto. Thus, the rotation angle may be detected through the output.

The present invention is made based on the above-described finding, and the summary thereof is a resolver-attached LV for a railway vehicle described below. That is, there is provided a resolver-attached LV for a railway vehicle which: is used in a railway vehicle, the railway vehicle comprising a vehicle body that is supported on a bogie through a pair of left and right air springs; includes an actuating shaft rotating in response to a variation in the height of each air spring; and performs a pressurized air supplying or discharging operation on the air spring in response to the rotation of the actuating shaft, so as to adjust the height of the vehicle body to be constant, the resolver-attached LV being characterized in that: it comprises a resolver that detects the height of the air spring so that the vehicle body is tilted when the railway vehicle travels along a curve; the resolver includes a rotor and a stator, the rotor being fixed to the actuating shaft and being made of a magnetic material, the stator being made of a magnetic material and arranged to surround the rotor; provided on an inner circumferential surface of the stator are a plurality of iron cores having excitation coils and detection coils that are wound therearound and arranged in a circumferential direction so as to face an outer circumferential surface of the rotor; and an outer peripheral profile of the rotor is configured such that a gap between the outer circumferential surface of the rotor and each iron core of the stator changes periodically in a circumferential direction during a 360-degree rotation of the rotor.

In the resolver-attached LV, the outer peripheral profile of the rotor may have a shape in which the gap changes by from three periods to six periods during a 360-degree rotation of the rotor.

Further, in the resolver-attached LV, the actuating shaft may be inserted into the rotation center of the rotor and the rotor may be fixed to the actuating shaft with a key.

### ADVANTAGEOUS EFFECTS OF INVENTION

According to the resolver-attached LV for the railway vehicle of the present invention, since the coils are only provided in the stator of the resolver without them in the rotor thereof, the coil windings are needed only in the stator, and a power supply brush and a rotation transformer are not necessary any more. For this reason, the structure may be simplified and the numbers of components may be reduced. Accordingly, the reduction of cost and size can be realized.

### BRIEF DESCRIPTION OF DRAWINGS

[FIG. 1] FIG. 1 is a schematic diagram illustrating a configuration example of a railway vehicle equipped with a resolver-attached LV of the present invention, whereas FIG. 1(a) illustrates a state in which a vehicle body height is adjusted and FIG. 1(b) illustrates a state in which a vehicle body is tilted.
[FIG. 2] FIG. 2 is a perspective view schematically illustrating an appearance of the resolver-attached LV of the present invention.
[FIG. 3] FIG. 3 is a diagram schematically illustrating a configuration example of a resolver in the resolver-attached LV of the present invention, whereas FIG. 3(a) illustrates a plan view and FIG. 3(b) illustrates a cross-sectional view taken along the line A-A of FIG. 3(a).
[FIG. 4] FIG. 4 is a diagram illustrating an example of an outer peripheral profile of a rotor that is used in the resolver, whereas FIG. 4(a) illustrates the outer peripheral profile which entails changes by three periods during a 360-degree rotation of rotor, FIG. 4(b) illustrates the outer peripheral profile which entails changes by four periods during a 360-degree rotation of rotor, and FIG. 4(c) illustrates the outer peripheral profile which entails changes by six periods during a 360-degree rotation of rotor.

### DESCRIPTION OF EMBODIMENTS

Hereinafter, an embodiment of a resolver-attached LV for a railway vehicle of the present invention will be described in detail.

### 1. Configuration of railway vehicle

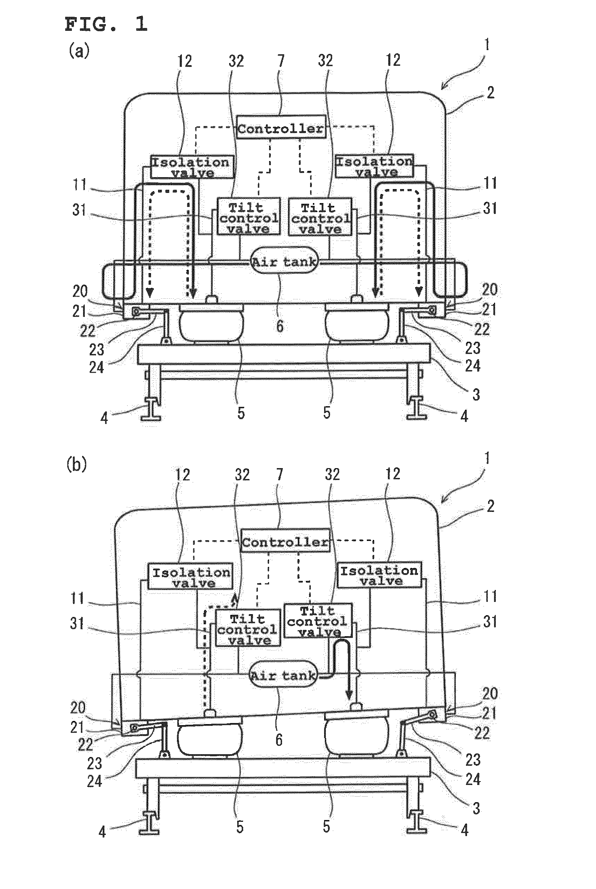

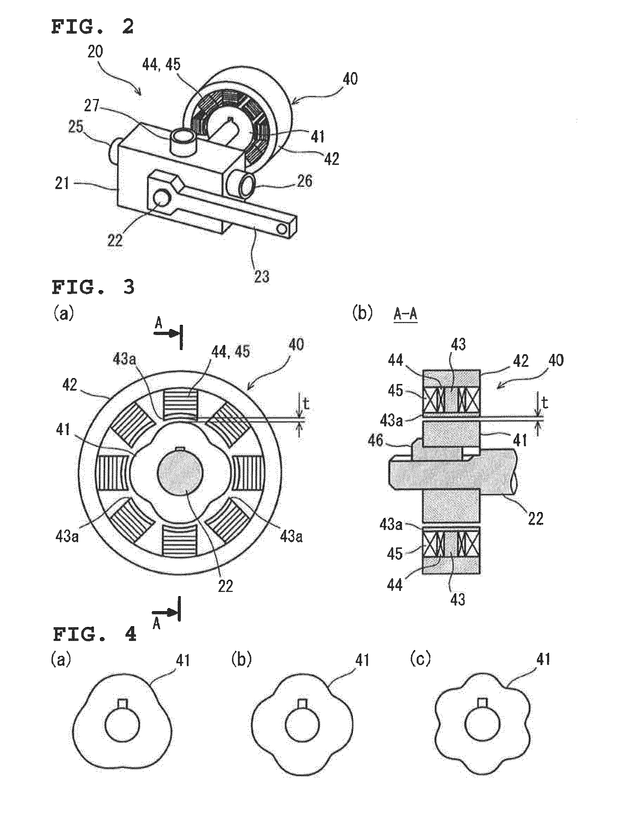

FIG. 1 is a schematic diagram illustrating a configuration example of a railway vehicle equipped with the resolver-attached LV of the present invention, whereas FIG. 1(a) illustrates a state in which a vehicle body height is adjusted and FIG. 1(b) illustrates a state in which a vehicle body is tilted. FIG. 2 is a perspective view schematically illustrating an appearance of the resolver-attached LV of the present invention.

A railway vehicle 1 includes a vehicle body 2 and a bogie 3 which supports the vehicle body 2 in front and behind , and travels on a rail 4. The vehicle body 2 is elastically supported by a pair of left and right air springs 5 which are interposed between the bogie 3 and the vehicle body. The railway vehicle 1 includes a vehicle body height adjustment device which adjusts the vehicle body 2 at a constant height on the left and right sides thereof with respect to the bogie 3 so as to maintain the posture of the vehicle body 2 in a horizontal state when the railway vehicle travels slowly or stops for passengers who want to get on or off the railway vehicle. Further, the railway vehicle 1 includes a vehicle body tilt device which tilts the vehicle body 2 with respect to the bogie 3 so as to tilt the vehicle body 2 toward the inner track side when traveling along a curve.

As the vehicle body height adjustment device, pneumatic piping (hereinafter, referred to as a "first piping" for convenience of description) 11 which extends from an air tank 6 to each air spring 5 is disposed, and a resolver-attached LV 20 is provided in the path of a first piping 11. Further, the first piping 11 is provided with an isolation valve 12 which is provided in the path between the LV 20 and the air spring 5. The isolation valve 12 is connected to a controller 7, and opens or closes the path by the command from the controller 7.

The LV 20 includes an actuating shaft 22 which rotatably passes through a valve body 21, and a lever 23 is mounted to the front end of the actuating shaft 22. In the LV 20, the valve body 21 is fixed to the vehicle body 2, and the lever 23 is connected to the bogie 3 by a link mechanism involving a connection rod 24. Also, there is a case in which the LV 20 is fixed to the bogie 3. In this case, the lever 23 of the LV 20 is connected to the vehicle body 2 by the same link mechanism.

As illustrated in FIG. 2, the valve body 21 of the LV 20 is provided with an inlet port 25, an outlet port 26, and a ventilation port 27. The inlet port 25 is connected with the first piping 11 connected to the air tank 6, and the ventilation port 27 is connected with the first piping 11 connected to the air spring 5. The outlet port 26 is connected with an exhaust pipe (not illustrated) which is opened to the outside. Although not illustrated in the drawings, a protrusion sticks out in a radial direction from the actuating shaft 22 inside the valve body 21, and the needle valve of the inlet port 25 and the needle valve of the outlet port 26 are disposed so as to be opposite to each other with the protrusion interposed therebetween. The LV 20 has a structure in which the actuating shaft 22 rotates through the link mechanism with a variation in the height of the air spring 5 so that any one of the needle valve of the inlet port 25 and the needle valve of the outlet port 26 is pressed by the protrusion and the pressed port 25 or 26 is opened.

As the vehicle body tilt device, as illustrated in FIG. 1, pneumatic piping (hereinafter, referred to as a "second piping" differently from the first piping) 31 which extends from the air tank 6 to each air spring 5 is disposed as a system different from the first piping 11 constituting the vehicle body height adjustment device, and a dedicated tilt control valve 32 is provided in the path of the second piping 31. The tilt control valve 32 is connected to the controller 7 and is operated by the command from the controller 7.

Further, as illustrated in FIG. 2, a resolver 40 is disposed behind the valve body 21 of the LV 20. The resolver 40 includes a rotor 41 and a stator 42 which surrounds the rotor. The rotor 41 is mounted as a rotation body to the rear end of the actuating shaft 22 of the LV 20, and the stator 42 is fixed as a stator body to the valve body 21. The inner circumferential surface of the stator 42 is provided with a plurality of excitation coils 44 and a plurality of detection coils 45 in a circumferential direction, and the conductive wires which are extended out from the respective coils 44 and 45 are connected to the controller 7 illustrated in FIG. 1 through an R/D converter (not illustrated).

In the resolver 40, the actuating shaft 22 rotates through the link mechanism with a variation in the height of the air spring 5, so that the rotor 41 rotates and a voltage with changing amplitude is generated in the detection coils 45 in response to the rotation angle. The resolver 40 detects the rotation angle from the waveform of the voltage generated in the detection coils 45 by the R/D converter, and specifies the height of the air spring from the rotation angle. Furthermore, the specific configuration of the resolver 40 will be described later.

In such a railway vehicle 1, when the height of the vehicle body is adjusted as in the case where the railway vehicle travels slowly or stops, the isolation valve 12 is maintained in an opened state and the tilt control valve 32 is maintained in a non-operation state by the command from the controller 7 as illustrated in FIG. 1(a). When the height of the air spring 5 varies in this state, the height variation is mechanically transmitted to the lever 23 of the LV 20 through the link mechanism (the connecting rod 24), so that the actuating shaft 22 of the LV 20 rotates along with the lever 23.

For example, when the height of the air spring 5 is lowered, the actuating shaft 22 of the LV 20 rotates in response thereto, and the protrusion of the actuating shaft 22 presses the needle valve of the inlet port 25, the inlet port 25 is opened. Accordingly, the path of the first piping 11 is opened all the way through, and pressurized air is supplied from the air tank 6 to the air spring 5 (see the solid arrow in FIG. 1(a)). On the contrary, when the height of the air spring 5 increases, the actuating shaft 22 of the LV 20 rotates in response thereto in a direction opposite to the above-described case, and the protrusion of the actuating shaft 22 presses the needle valve of the outlet port 26, the outlet port 26 is opened. Accordingly, the air inside the air spring 5 is discharged to the outside through the first piping 11 extending from the air spring 5 to the LV 20 (see the dashed arrow in FIG. 1(a)).

In this way, the LV 20 mechanically detects a variation in the height of the air spring 5, and duly performs a pressurized air supplying or discharging operation on the air spring 5 in response to the height variation, so that the vehicle body 2 is adjusted to be a constant height on the left and right sides thereof with respect to the bogie 3.

Meanwhile, when the vehicle body is tilted as in the case where the railway vehicle travels fast along a curve, the isolation valve 12 is maintained in a closed state by the command from the controller 7 as illustrated in FIG. 1(b). This is because the vehicle body height adjustment function using the LV 20 must be stopped. At this time, the controller 7 operates the tilt control valve 32 based on the track information of the curve so that the tilt angle of the vehicle body 2 becomes a predetermined angle.

For example, a case will be considered in which the height of the air spring 5 on the outer track side (the right side in FIG. 1(b)) among the left and right air springs 5 is set to be higher than the height of the air spring 5 on the inner track side (the left side in FIG. 1(b)) so as to tilt the vehicle body 2 toward the inner track side by a predetermined angle. In this case, pressurized air is supplied to the air spring 5 on the outer track side through the second piping 31 by the operation of the tilt control valve 32 on the outer track side (see the solid arrow in FIG. 1(b)). At this time, in some cases, the air inside the air spring 5 on the inner track side is discharged to the outside through the second piping 31 by the operation of the tilt control valve 32 on the inner track side (see the dashed arrow in FIG. 1(b)).

At that time, the controller 7 duly acquires the output signals output from the resolver 40 through the R/D converter, detects the height of the air spring 5, and then duly detects the tilt angles of the vehicle body 2 from the height of the air spring. Then, the controller 7 performs a pressurized air supplying or discharging operation on the air spring 5 by continuously operating the tilt control valve 32 so that the duly detected tilt angles of the vehicle body 2 become a predetermined angle.

### 2. Configuration of resolver

FIG. 3 is a diagram schematically illustrating a configuration example of the resolver of the resolver-attached LV of the present invention, whereas FIG. 3(a) illustrates a plan view and FIG. 3(b) illustrates a cross-sectional view taken along the line A-A of FIG. 3(a). FIG. 4 is a diagram illustrating an example of an outer peripheral profile of the rotor that is used in the resolver, whereas FIG. 4(a) illustrates the outer peripheral profile which entails changes by three periods during a 360-degree rotation, FIG. 4(b) illustrates the outer peripheral profile which entails changes by four periods during a 360-degree rotation, and FIG. 4(c) illustrates the outer peripheral profile which entails changes by six periods during a 360-degree rotation. FIG. 3 illustrates FIG. 4(b) in which the outer peripheral profile of the rotor entails changes by four periods during a 360-degree rotation.

As illustrated in FIG. 3, the resolver 40 includes the rotor 41 which is the rotation body and the stator 42 which is the stationary body surrounding the rotor, and both members are made of a magnetic material. The actuating shaft 22 of the LV is inserted into the rotation center of the rotor 41, and a key 46 is inserted into the rotor 41 so that the rotor is securely fixed to the actuating shaft 22 (see FIG. 3(b)). In the inner circumferential surface of the stator 42, a plurality of iron cores 43 are circumferentially provided so as to face the outer circumferential surface of the rotor 41, and the excitation coils 44 and the detection coils 45 are wound on the respective iron cores 43 in the order described from the width-wise middle thereof. The circumferential peripheral contour of the inner end surface portion 43a of the iron core 43 is formed in a circular-arc shape, as being in a concentric arrangement with respect to the rotor 41.

The rotor 41 has a unique outer peripheral profile. That is, the outer peripheral profile of the rotor 41 is formed in a shape in which a gap t between the outer circumferential surface of the rotor 41 and the inner circumferential end surface portion 43a of the iron core 43 of the stator 42 changes periodically in a circumferential direction during a 360-degree rotation of the rotor 41. For example, the shape of the rotor 41 in a case where the gap t changes by three periods during a 360-degree rotation of the rotor 41 is a rounded triangular star shape as illustrated in FIG. 4(a). Further, the shape of the rotor 41 in a case where the gap t changes by four periods is a rounded square star shape as illustrated in FIG. 4(b). The shape of the rotor 41 in a case where the gap t changes by six periods is a rounded hexagonal star shape as illustrated in FIG. 4(c).

In the resolver 40 with such a configuration, the actuating shaft 22 rotates through the link mechanism according to a variation in the height of the air spring 5, so that the rotor 41 rotates, the gap t changes in response to the rotation angle, and the density of the magnetic flux permeating the gap t changes in response thereto. Thus, a voltage with changing amplitude is generated in the detection coils 45, and the rotation angle is detected from the voltage waveform, so that the height of the air spring 5 can be detected.

Here, the resolver (hereinafter, referred to as a "VR (variable reluctance) resolver") which is employed in the present invention is poorer in angle measurement precision than that of the resolver (with a structure in which the coils are provided in both the rotor and the stator) of the above-described related art. In general, the measurement error of the resolver of the related art is 0.02 to 0.09° for the general purpose, but the measurement error of the VR resolver is 1° at maximum.

Meanwhile, in a case where the resolver is used to measure the height of the air spring, the measurement error of the height of the air spring is expressed by "lever length x sin (resolver angle measurement error)". The "lever length" mentioned herein is the "lever length of the resolver". In a general railway vehicle, the span between the left and right air springs is 2000 mm, and the measurement error of the tilt angle of the vehicle body needs to be 0.05° or less. From the conversion of these, the measurement error of the height of the air spring needs to be 2 mm or less. In this case, when the lever length is set to 140 mm, the angle measurement error which is allowed in the resolver is about 0.8°. Accordingly, it may happen that the allowable measurement precision in the VR resolver may not be satisfied. Hereinafter, countermeasures for reliably ensuring the measurement precision of the VR resolver will be discussed.

In a VR resolver that uses the rotor (the oval rotor) entailing changes by two periods during a 360-degree rotation of the outer peripheral profile, the angle measurement error is 1°. On the contrary, as illustrated in FIG. 4(a), in a VR resolver that uses the rotor entailing changes by three periods during a 360-degree rotation of the outer peripheral profile, the angle measurement error is 0.75°. In this case, the angle measurement error may be reliably guaranteed in the range of 120° obtained by dividing a 360-degree rotation of the rotor by three periods, that is, three sections. Further, as illustrated in FIG. 4(b), in a VR resolver that uses the rotor entailing changes by four periods during a 360-degree rotation of the outer peripheral profile, the angle measurement error is 0.50°. In this case, the angle measurement error may be reliably guaranteed in the range of 90° obtained by dividing a 360-degree rotation of the rotor by four periods, that is, four sections.

When such a tendency is adopted, in the VR resolver that uses the rotor entailing changes by three periods or more during a 360-degree rotation of the outer peripheral profile, at least the angle measurement error of 0.75° or less may be guaranteed, and the measurement precision (0.8° or less) allowed in the railway vehicle can be satisfied.

Further, in a general railway vehicle, the height of the air spring varies in the range of -4 to 120 mm, and this variation corresponds to -11.5 to 37° in terms of the conversion into the rotation angle of the VR resolver. For this reason, in order to reliably guarantee the angle measurement error in the VR resolver, there is a need to guarantee the measurement range using the VR resolver at 55° or more in consideration of the safety. Due to this reason, in the VR resolver that uses the rotor entailing changes by six periods during a 360-degree rotation of the outer peripheral profile, the range capable of reliably guaranteeing the angle measurement error is 60° obtained by dividing a 360-degree rotation of the rotor by six periods, that is, six sections, and this is the measurement range necessary for the general railway vehicle. However, in the VR resolver that uses a rotor entailing changes by certain periods exceeding six periods, for example, a rotor entailing changes by seven periods during a 360-degree rotation of the outer peripheral profile, the range capable of reliably guaranteeing the angle measurement error is 51.4° obtained by dividing a 360-degree rotation of the rotor by seven periods, that is, seven sections, and this exceeds the measurement range necessary for the general railway vehicle.

Accordingly, it is desirable that the VR resolver include a rotor with an outer peripheral profile that entails changes by three periods, four periods, five periods, or six periods during a 360-degree rotation. This is because the angle measurement error required in the general railway vehicle may be reliably guaranteed.

### INDUSTRIAL APPLICABILITY

As described above, according to the resolver-attached LV for the railway vehicle of the present invention, since coils are provided only in the stator of the resolver as being absent in the rotor thereof, the coil windings are needed only in the stator, and a power supply brush and a rotation transformer are not necessary any more. For this reason, the configuration may be simplified and numbers of components can be reduced. Accordingly, reductions of cost and size can be realized.

### REFERENCE SIGNS LIST

- 1: Railway vehicle
- 2: Vehicle body
- 3: Bogie
- 4: Rail
- 5: Air spring
- 6: Air tank
- 7: Controller
- 11: First piping (pneumatic piping)
- 12: Isolation valve
- 20: LV (leveling valve, i.e., vehicle body height adjustment valve)
- 21: Valve body
- 22: Actuating shaft
- 23: Lever
- 24: Connecting rod
- 25: Inlet port
- 26: Outlet port
- 27: Ventilation port
- 31: Second piping (pneumatic piping)
- 32: Tilt control valve
- 40: Resolver
- 41: Rotor
- 42: Stator
- 43: Iron core
- 43a: End surface portion
- 44: Excitation coil
- 45: Detection coil
- 46: Key
- t: Gap

## Claims

1. A vehicle body height adjustment valve having a resolver for a railway vehicle which is used in a railway vehicle, the railway vehicle including a vehicle body that is supported on a bogie through a pair of left and right air springs; includes an actuating shaft rotating in response to a variation in the height of each air spring; and performs a pressurized air supplying or discharging operation on the air spring in response to the rotation of the actuating shaft, so as to adjust the height of the vehicle body to be constant, the vehicle body height adjustment valve being **characterized in that**:
it comprises a resolver that detects the height of the air spring so that the vehicle body is tilted when the railway vehicle travels along a curve;
the resolver includes a rotor and a stator, the rotor being fixed to the actuating shaft and being made of a magnetic material, the stator being made of a magnetic material and arranged to surround the rotor;
provided on an inner circumferential surface of the stator are a plurality of iron cores having excitation coils and detection coils that are wound therearound and arranged in a circumferential direction so as to face an outer circumferential surface of the rotor; and
an outer peripheral profile of the rotor is configured such that a gap between the outer circumferential surface of the rotor and each iron core of the stator changes periodically in a circumferential direction during a 360-degree rotation of the rotor.

2. The vehicle body height adjustment valve having a resolver for a railway vehicle according to Claim 1, **characterized in that**:
the outer peripheral profile of the rotor is configured such that the gap changes by from three periods to six periods during a 360-degree rotation of the rotor.

3. The vehicle body height adjustment valve having a resolver for a railway vehicle according to any one of Claims 1 and 2, **characterized in that**:
the actuating shaft is inserted into the rotation center of the rotor and the rotor is fixed to the actuating shaft with a key.
